# FASCICULE DE BREVET EUROPEEN

(11) **EP 3 478 476 B1**
(45) Date de publication et mention de la délivrance du brevet: **17.03.2021**
(21) Numéro de dépôt: 17731920.9
(22) Date de dépôt: 26.06.2017
(51) Int. Cl.: B29C 51/12, B29C 51/10, B29K 69/00, B29C 51/06, B29C 51/08, B29L 21/00, B29L 31/00

(54) **PIÈCE THERMOFORMÉE COMPORTANT UN ÉLÉMENT RAPPORTÉ ET PROCÉDÉ POUR LA FABRICATION D'UNE TELLE PIÈCE**
THERMOGEFORMTES WERKSTÜCK MIT EINEM ANGEWANDTEN ELEMENT UND VERFAHREN ZUR HERSTELLUNG SOLCH EINES WERKSTÜCKS
THERMOFORMED WORKPIECE COMPRISING AN APPLIED ELEMENT, AND METHOD FOR MANUFACTURING A WORKPIECE OF THIS TYPE

(30) Priorité: 04.07.2016 FR 1670364
(43) Date de publication de la demande: 08.05.2019
(73) Titulaire: Aplix, 44850 Le Cellier (FR)
(72) Inventeur: TORLAY, Laurent Jean Michel, 44850 Le Cellier (FR); MARCHE, Thierry, 44850 Le Cellier (FR)
(74) Mandataire: Eidelsberg, Olivier Nathan
(86) Numéro de dépôt international: PCT/EP2017/065656
(87) Numéro de publication internationale: WO 2018/007183

(56) Documents cités:
- JP-A- H06 190 910
- JP-A- 2004 090 465
- JP-A- 2014 008 732

## Description

La présente invention se rapporte à une pièce réalisée à partir d'un thermoformage d'au moins une feuille en un matériau plastique, notamment de grande rigidité, par exemple en polycarbonate (PC). La présente invention se rapporte aussi à un procédé pour fabriquer une pièce de ce genre.

A partir d'une feuille en matière plastique, notamment thermoplastique, en particulier rigide à température ambiante ou d'utilisation de la pièce, par exemple en polycarbonate (PC), on réalise par thermoformage des objets de formes diverses. Il est déjà connu dans l'art antérieur de fixer à la pièce thermoformée un élément rapporté, notamment un élément auto-agrippant, par exemple un élément à crochets, comportant un élément de base et des crochets faisant saillie de cet élément de base.

Dans ces pièces thermoformées de l'art antérieur, le problème se pose que l'élément rapporté, notamment l'élément auto-agrippant, qui en général est en un matériau différent de celui de la pièce thermoformée, se fixe mal à cette pièce, dans le cas d'une fixation par de la colle ou par soudure, et il est fréquent que l'élément rapporté, pendant l'utilisation de la pièce, se détache soit petit à petit, notamment par pelage, soit brusquement, notamment par traction et/ou par clivage, rendant la pièce inutilisable. De même, dans le domaine du packaging, dans lequel l'élément rapporté, notamment une fermeture auto-agrippante ou par zip, est fixé à l'emballage par soudure, la fermeture n'est pas fiable sur la durée. En outre, les procédés pour fixer un élément rapporté à une pièce thermoformée sont complexes, coûteux et nécessitent la mise en œuvre de moyens de contrôle importants et complexes pour s'assurer de la bonne qualité de la fixation.

La présente invention vise à surmonter les inconvénients de l'art antérieur en proposant une pièce, ayant une forme réalisée par thermoformage à partir d'au moins une feuille en matière plastique, par exemple en polycarbonate, et au moins un élément rapporté étant rapporté à la pièce en y étant solidarisé, par exemple un élément auto-agrippant à crochets, qui a une longue durée de vie, et notamment dont la fixation résiste longtemps, sans risque de rupture.

Au document JP 2004 090465 A, il est décrit une pièce ayant une forme réalisée par thermoformage à partir d'au moins une feuille en matière plastique et au moins un élément rapporté, par exemple un élément auto-agrippant à crochets, étant rapporté à la au moins une feuille en y étant solidarisé.

Au document JP 2014 008732, il est décrit une pièce telle que définie au préambule de la revendication 1

JP2014 008732 A décrit également un procédé de fabrication d'une pièce comportant au moins une feuille en matière plastique, notamment rigide, par exemple en polycarbonate, et au moins un élément rapporté, qui comporte les étapes dans lesquelles :
- on réalise un moule ayant une surface extérieure correspondant à la forme de la pièce finale souhaitée;
- on positionne sur la surface extérieure, de préférence sur une partie plane, au moins un élément à rapporter que l'on souhaite solidariser à la feuille, ce positionnement étant réalisé de sorte qu'au moins une partie de l'élément à rapporter est à distance de la surface extérieure du moule; - on amène en face de la surface extérieure du moule une feuille en matière plastique, par exemple en polycarbonate, chauffée à une température permettant son thermoformage;
- on met en contact la surface extérieure du moule et la feuille chauffée pour donner à la feuille sa forme finale, la feuille, lors de la mise en contact, venant s'introduire entre la partie de l'élément rapporté à distance de la surface extérieure du moule et la surface extérieure du moule pour réaliser le sertissage de l'élément rapporté à la feuille après retour à une température inférieure à la température de fléchissement sous charge de la matière plastique de la feuille, notamment à température ambiante.

Suivant l'invention, la pièce ayant une forme réalisée par thermoformage est telle que définie à la revendication 1.

En sertissant l'élément rapporté, notamment l'élément auto-agrippant à crochets, à la surface extérieure de la pièce thermoformée (plus particulièrement dans une cavité formée dans la feuille thermoformée), on s'affranchit des difficultés liées à la fixation difficile de l'élément rapporté, notamment due à la faible affinité que peuvent avoir le ou les matériaux de la feuille et de l'élément rapporté entre eux ou vis à vis d'un adhésif ou d'une soudure, et on obtient une bonne fixation de l'élément rapporté à la feuille thermoformée. En outre, la fixation s'effectue sans avoir à former de trous dans la feuille qui réduirait la rigidité de l'assemblage final et/ou le fragiliserait et/ou nuirait à son étanchéité.

Suivant un mode de réalisation avantageux, l'élément rapporté est un élément auto-agrippant à crochets, constitué d'une embase et d'un champs de crochets faisant saillie d'une face inférieure de l'embase, le sertissage de l'élément rapporté étant tel que l'embase est reçue dans un évidement formé par la feuille d'une manière qui l'empêche d'en sortir, tandis que des crochets, notamment tous les crochets, restent accessibles de l'extérieur, notamment pour coopérer avec un autre élément auto-agrippant, par exemple à boucles ou à crochets.

De préférence, des ou les crochets restent accessibles de l'extérieur dans leur totalité, sans avoir de partie, notamment leur tige, en contact avec la feuille.

En particulier, au moins un des crochets les plus à la périphérie du champs de crochets, notamment tous les crochets les plus à la périphérie du champs de crochets sont à distance de la feuille thermoformée.

Selon l'invention, l'élément rapporté serti à la feuille thermoformée peut également être un autre système d'assemblage, par exemple mécanique tel qu'un clip (ou sa contrepartie), une vis, une cheville (plastique ou métallique), une goupille (filetée, taraudée, ...) une sangle, ou magnétique tel qu'un élément aimanté.

De préférence, l'élément rapporté définit un surplomb, notamment périphérique, sous lequel s'insère la feuille thermoformée pour réaliser le sertissage.

Suivant un mode de réalisation avantageux, la feuille a une épaisseur dans la zone de sertissage qui est inférieure à l'épaisseur moyenne de la feuille hors de la zone de sertissage.

Suivant un mode de réalisation avantageux, le surplomb est supérieur à au moins 1/3 de l'épaisseur moyenne de la feuille hors zone de sertissage.

De préférence, l'élément rapporté comporte une embase ayant au moins deux bords rectilignes parallèles opposés définissant deux surplombs parallèles pour la feuille, de sorte que l'élément rapporté est serti à la feuille en conservant cependant une mobilité parallèlement aux deux bords rectilignes.

De préférence, l'élément rapporté comporte une embase ayant un bord circulaire définissant un surplomb périphérique circulaire pour la feuille, de sorte que l'élément rapporté est serti à la feuille en conservant cependant une mobilité en rotation par rapport à l'axe de l'embase.

Suivant un mode de réalisation, la forme de ladite pièce ayant une forme est réalisée par thermoformage d'une feuille, laquelle feuille comprenant un rapport de la surface sur le carré de l'épaisseur (s/e²) supérieur à 200, de préférence supérieur à 1000.

De préférence, la hauteur disponible de sertissage, c'est à dire la distance du point le plus à l'extérieur de l'embase jusqu'à la face inférieure de la feuille thermoformée, est supérieure ou égale à l'épaisseur moyenne de la feuille (e) hors de la zone de sertissage, préférentiellement la hauteur (a) disponible est supérieure ou égale à deux fois l'épaisseur moyenne.

La présente invention se rapporte également à un procédé de fabrication d'une pièce comportant au moins une feuille en matière plastique, par exemple en polycarbonate, et au moins un élément rapporté, qui comporte les étapes dans lesquelles :
- on réalise un moule ayant une surface extérieure correspondant à celle de la forme de la pièce finale souhaitée ;
- on positionne sur la surface extérieure du moule, de préférence sur une partie plane (ou dans un renfoncement/cavité du moule ou sur un piédestal agencé dans le moule de sorte à maintenir temporairement l'élément à rapporter), le au moins un élément à rapporter que l'on souhaite solidariser à la pièce finale, ce positionnement étant réalisé de sorte qu'au moins une partie du au moins un élément est à distance de la surface extérieure ;
- on amène au moins une feuille en matière plastique, par exemple en polycarbonate, chauffée à une température permettant son thermoformage ;
- on met en contact la surface extérieure du moule et la au moins une feuille chauffée pour donner à la au moins une feuille sa forme finale, la au moins une feuille, lors de la mise en contact, s'introduisant entre d'une part la au moins une partie du au moins un élément à rapporter à distance de la surface extérieure du moule et d'autre part la surface extérieure du moule pour réaliser le sertissage de l'élément rapporté à la pièce après retour de la au moins une feuille à une température inférieure à la température de fléchissement sous charge du matériau plastique, notamment à la température ambiante.

De préférence, la mise en contact de la surface extérieure du moule comportant un ou des éléments rapportés avec la feuille chauffée s'effectue à l'aide de moyens d'aspiration destinés à plaquer la feuille contre le moule par formation d'un différentiel de pression (ou vide) entre eux.

De préférence, la mise en contact de la surface extérieure du moule comportant un ou des éléments rapportés avec la feuille chauffée est réalisée de manière plus forte au niveau de l'élément rapporté ou de chaque élément rapporté par rapport aux autres zones de la feuille, par exemple en prévoyant une aspiration plus forte au niveau de l'élément rapporté ou de chaque élément rapporté.

A titre d'exemple, on décrit maintenant un mode de réalisation préféré de l'invention en se reportant aux dessins, dans lesquels :
les figures 1A, 1B et 1C représentent schématiquement trois étapes principales d'un exemple de procédé de thermoformage d'une pièce suivant l'invention ;
Les figures 1D, 1E, 1F et 1G représentent schématiquement quatre étapes principales d'un autre exemple de procédé de thermoformage d'une pièce suivant l'invention ;
la figure 2 représente schématiquement la surface extérieure d'un moule avant thermoformage d'une feuille, des éléments rapportés constitués d'éléments auto-agrippants ayant été préalablement positionnés sur la surface extérieure du moule ;
la figure 3 est une vue schématique de dessous de la pièce finale obtenue, avant éjection de celle ci du moule ;
la figure 4 est une vue schématique de dessus de la pièce finale obtenue ;
les figures 5A, 5B et 5C sont des vues schématiques en coupe suivant la ligne A-A de la figure 4, au niveau de l'interface entre l'élément rapporté et de la feuille de la pièce finale, suivant plusieurs cas de figures, et notamment suivant la position préalable des crochets par rapport à la paroi du moule lors de l'application de la feuille thermoformée sur la paroi du moule;
les figures 6 à 11 sont des vues schématiques en coupe similaires à celles des figures 5A à 5C, représentant d'autres modes de réalisation d'une pièce suivant l'invention ;

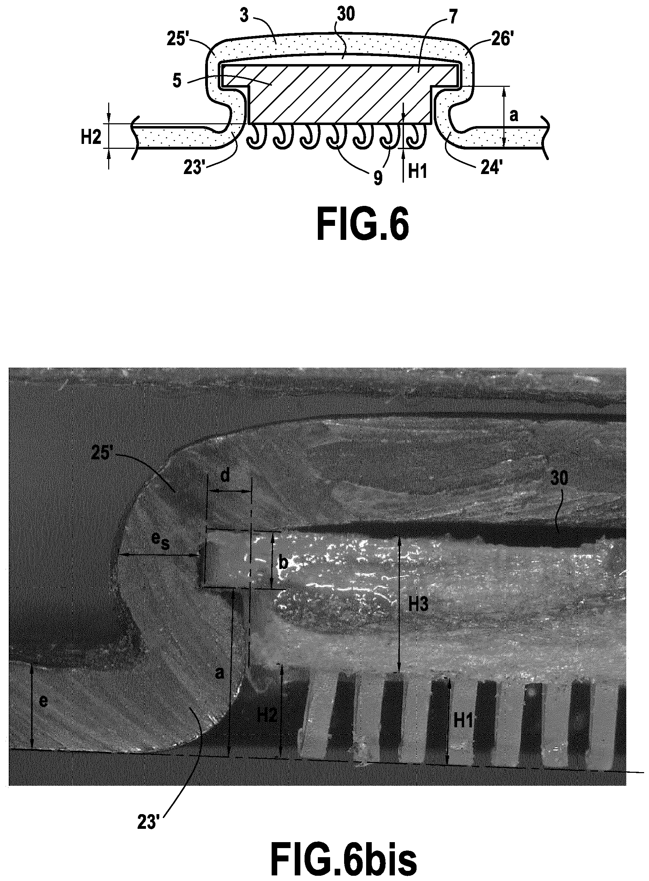

la figure 6bis est une photographie de la partie d'une pièce suivant un mode de réalisation de l'invention représenté schématiquement à la figure 6 ;

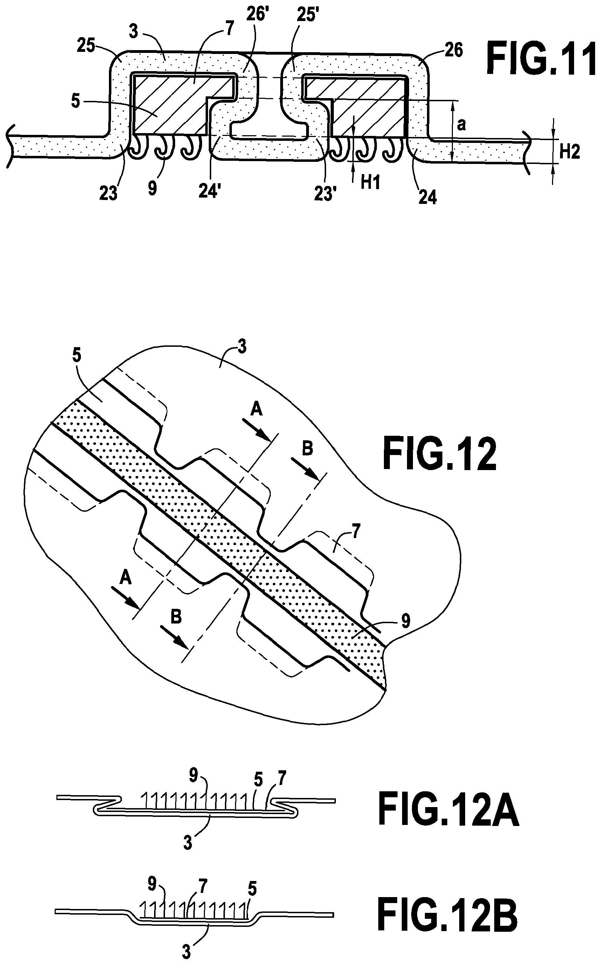

la figure 12 est une vue schématique de dessus d'un mode de réalisation d'une pièce suivant l'invention dans le domaine des transports, notamment pour réaliser des sièges ;
la figure 12A est une vue en coupe suivant la ligne AA de la figure 12 ;
la figure 12B est une vue en coupe suivant la ligne BB de la figure 12 ;

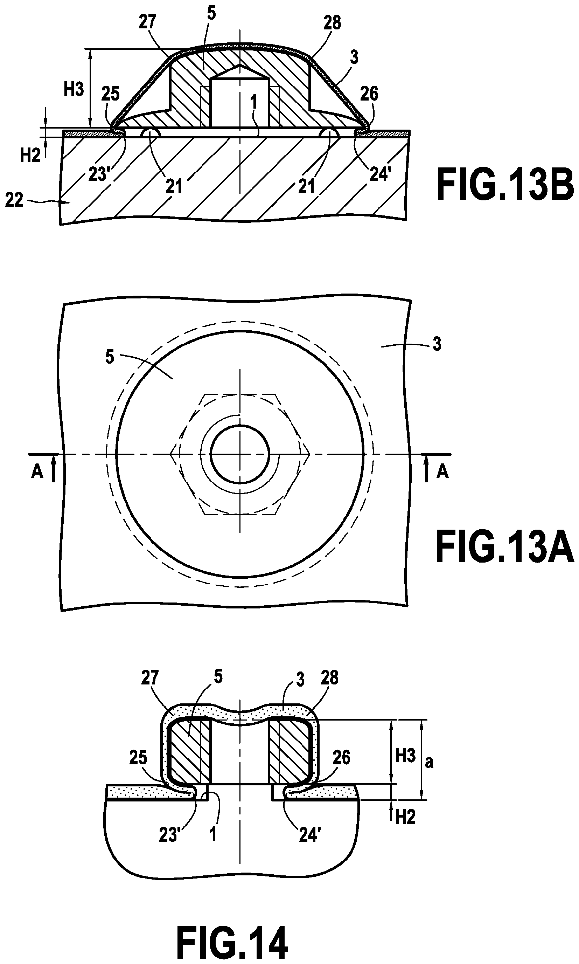

la figures 13A est une vue schématique de dessous d'un mode de réalisation d'une pièce suivant l'invention ;
la figure 13B est une vue en coupe selon la ligne AA de la figure 13A dans laquelle une partie du moule est représenté ; et

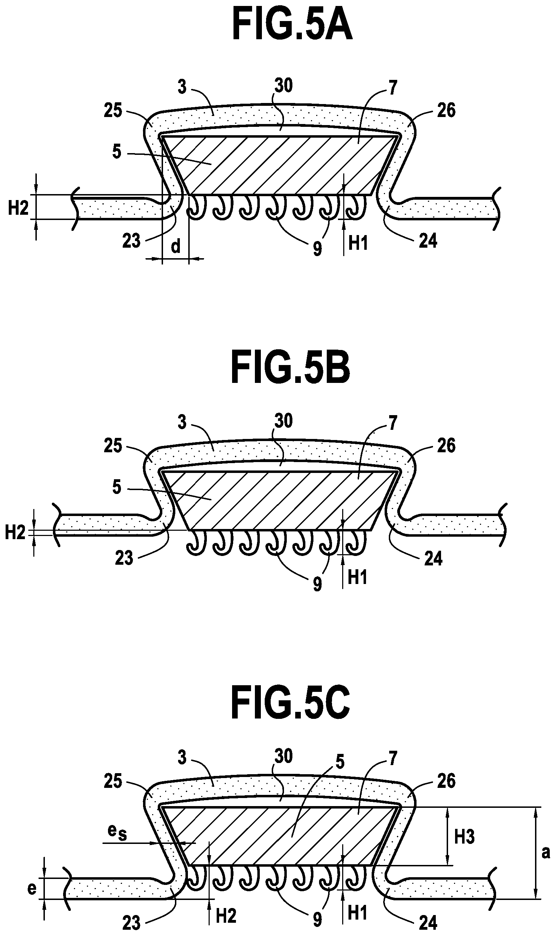

la figure 14 est une vue schématique en coupe similaires à celles des figures 5A à 5C, représentant un autre mode de réalisation d'une pièce suivant l'invention ainsi qu'une partie d'un moule.

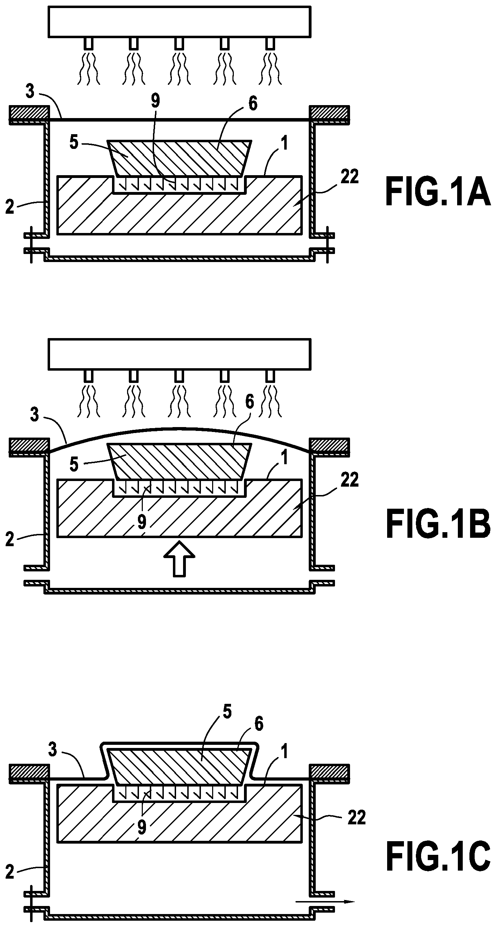

Aux figures 1A à 1C, il est représenté un procédé de thermoformage, dans lequel un moule 22 en métal ayant une surface extérieure 1 ayant la forme que l'on souhaite donner à la pièce finale est positionné dans un caisson 2 aux parois étanches. Une feuille 3 en matière plastique, notamment rigide, notamment en polycarbonate (PC), ABS, PS, PS/PE, PEHD, PP, PETG, PMMA, PVC, ABS/PC, KYDEX, CA (tri-acétate de cellulose), EC (éthyle cellulose), PA6, POM, PET, renforcée ou non ou un composite avec des fibres de verre ou de carbone, est déposée au-dessus du caisson et la feuille 3 est chauffée par rayonnement pour la ramollir et permettre son thermoformage sur le moule 22. La feuille en matière plastique peut être réalisée par extrusion, injection, moulage, laminage, compactage, soufflage découpe, ou tout autre procédé classique de fabrication d'une telle feuille destinée à être thermoformée. La feuille peut être composée d'une seule matière, de plusieurs matières ou d'une pluralité de films. On entend par feuille également une préforme, sur laquelle on peut rapporter un élément par le procédé suivant l'invention.

Comme représenté à la figure 1B, on fait alors monter le moule pour amener sa surface extérieure 1 qui fait face à la feuille 3 ramollie en contact avec celle-ci et il est fait en sorte, notamment par réalisation d'un vide dans le caisson, que la feuille 3 vienne épouser intimement la forme de la surface extérieure 1 du moule, pour ainsi donner à la feuille 3 sa forme finale. La feuille peut avoir une épaisseur variable. Elle peut également correspondre à une préforme tridimensionnelle.

D'autres procédés de thermoformage sont possibles suivant l'invention. En particulier, au lieu d'amener le moule à la feuille, on peut faire l'inverse et amener la feuille au moule, ou déplacer les deux éléments l'un vers l'autre. Le procédé décrit aux figures 1A à 1C est désigné sous l'appellation thermoformage à gonflage et aspiration.

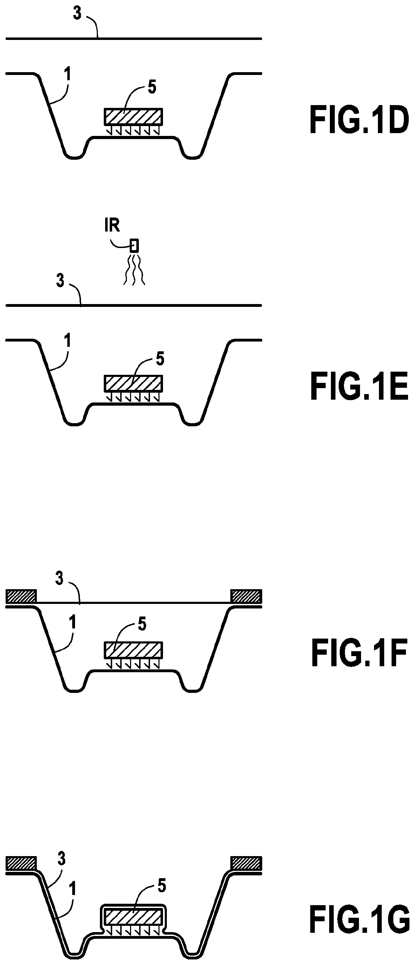

Un autre procédé préféré est décrit aux figures 1D à 1G.

Dans une première étape (Figure 1D), la feuille est amenée au dessus du moule et de l'élément à rapporter. Dans une deuxième étape (Figure 1E) la feuille est chauffée, par exemple par infrarouge. Dans une troisième étape (Figure 1F), la feuille est descendue sur le moule et on réalise l'étanchéité entre la feuille et le moule au niveau des bords de la feuille avec un cadre pour former une cavité fermée et étanche. Dans une quatrième étape (Figure 1G), l'air présent dans la cavité est aspiré pour ainsi déformer la feuille par formation de vide. La feuille vient alors en contact avec le moule. Dans une cinquième étape (non représentée), le moule et la feuille (la feuille et l'élément rapporté étant solidarisés) sont séparés, par éjection.

D'autres procédés de thermoformage peuvent être utilisés, seul ou en combinaison, incluant le thermoformage avec poinçon/matrice, par écart de pression (vide et/ou air comprimé), le poinçonnage montant, le poinçonnage descendant, le thermoformage semi-continu (déroulage d'un film, arrêt, thermoformage, découpe, reprise du cycle, et/ou le thermoformage continu. Plutôt qu'un déroulage de film, on peut aussi envisager l'extrusion en direct du film. Les procédés décrits ici peuvent également être étendus aux procédés réalisant une préforme avant le thermoformage par le vide ou par pression, comme l'injection soufflage et l'extrusion soufflage.

Suivant l'invention, avant d'amener en contact le moule et la feuille extrudée chauffée, on positionne sur la surface extérieure du moule, du côté faisant face à la feuille chauffée, le ou les élément(s) à rapporter que l'on souhaite y solidariser, notamment un ou des éléments 4, 5 à crochets comportant une embase 6, 7 et des crochets 8, 9 faisant saillie de la feuille. L'élément rapporté, notamment l'élément à crochets, est disposé de sorte qu'une partie de l'élément rapporté, par exemple l'embase 6 ou 7, reste à distance du moule, par exemple en positionnant les crochets du côté du moule, contre celui-ci.

Pour positionner le ou les éléments à rapporter sur le moule on peut simplement le ou les poser dessus. On peut également poser le ou les éléments à rapporter dans un renfoncement ou une cavité ou encore sur un piédestal agencé dans le moule. On peut aussi le fixer temporairement par de la colle, par aspiration, par aimantation, par clipsage dans une cavité adaptée, par une fixation auto-agrippante ou par toute autre technique analogue.

L'élément rapporté peut être en tout matériau, notamment en matière plastique, thermoplastique, thermodurcissable, métallique, textile ou un composé de plusieurs matériaux de ce genre. La seule condition est que la rigidité de la matière de la partie de l'élément rapporté destinée à être emprisonnée dans la feuille doit être supérieure à la rigidité de celle de la pièce, lorsque la feuille est à l'état ramolli.

Par exemple, pour une feuille en polycarbonate, la rigidité ou flexion mesurée par le « module de flexion » selon la norme ASTM D790, est comprise entre 1500MPa et 3500MPa. Plus généralement, on entend par une feuille en matière plastique rigide une feuille ayant une rigidité ou flexion mesurée par le « module de flexion » suivant la norme ASTM D790, comprise entre 2000MPa et 4000MPa, en particulier entre 2200MPa et 3500MPa.

Par exemple, on peut utiliser une matière plastique ayant une rigidité ou flexion mesurée par le « module de flexion » suivant la norme ASTM D790, comprise entre 2000MPa et 37000MPa, en particulier entre 2000MPa et 15000MPa, ou une matière plastique ayant une rigidité ou flexion mesurée par le « module de flexion » suivant la norme ASTM D790 supérieure à 15000MPa, notamment supérieure à 20000MPa, par exemple dans le cas de matière plastique comprenant des fibres de verre et/ou de carbone.

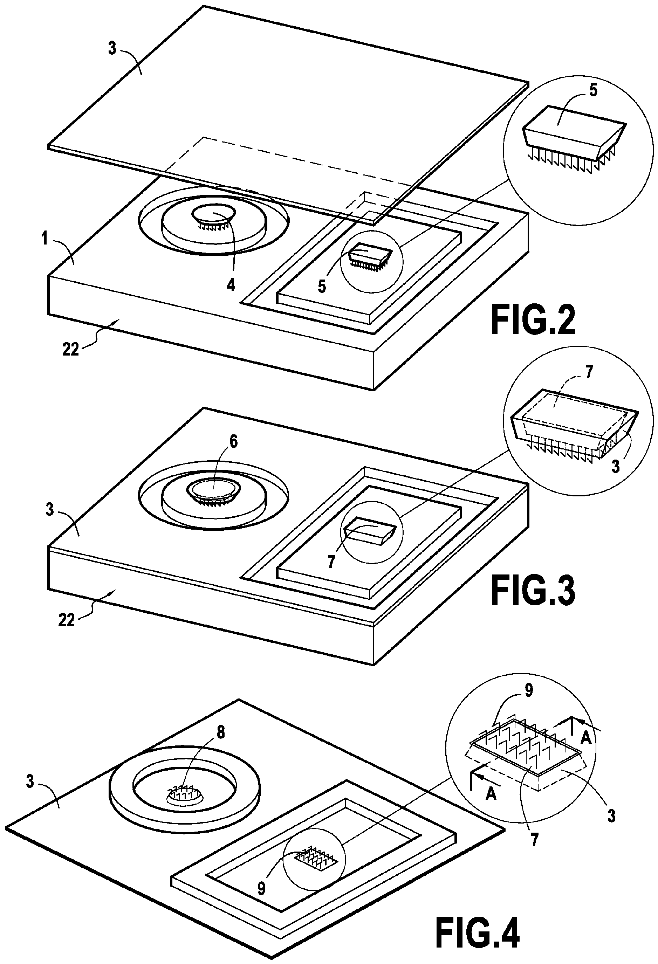

Lors du thermoformage, la feuille 3 vient recouvrir la surface supérieure, du côté sans crochet, de l'embase et également s'introduire en partie sous cette embase sensiblement de manière périphérique jusqu'aux crochets pour faire ainsi en sorte que l'élément à crochets soit serti dans la feuille. On obtient alors la pièce comme représentée aux figures 3 à 11.

Comme on le voit aux figures 5A à 5C, l'embase de l'élément à crochets est emprisonnée dans la feuille 3 par le fait que celle-ci, lors du thermoformage, s'est insérée périphériquement sous l'embase 6 ou 7 de l'élément rapporté, et une fois revenue à une température inférieure à la température de fléchissement sous charge du matériau plastique, par exemple à la température ambiante, maintient par sertissage l'embase et donc l'élément rapporté à la feuille.

Dans le cas d'une feuille en polycarbonate, la température de formage peut être comprise entre 168°C et 188°C, la température de fléchissement sous charge étant d'environ 140°C (avec une charge de 0,45MPa).

Comme on le voit aux figures 5A à 5C, la feuille présente dans la zone de sertissage, en coupe transversale, une forme générale en oméga (Ω). La forme réalisée par thermoformage présente un U ou un C de retournement sous le surplomb d ou dans la zone de surplomb d.

Comme représenté aux figures 5A à 5C, l'embase de l'élément rapporté fait saillie latéralement au-delà des crochets les plus à la périphérie du champs de crochets d'une distance d.

La distance d (appelée distance de surplomb ou surplomb) est, vue en coupe, la distance mesurée horizontalement entre le bord le plus à l'extérieur de la face de l'élément à crochets de laquelle les crochets font saillie et le bord le plus à l'extérieur de l'embase de l'élément à crochets. Cela correspond au surplomb périphérique formé dans l'élément pour permettre à la feuille de s'insérer sous l'embase de l'élément.

La hauteur H1 des crochets peut être comprise entre 0,1mm et 3mm.

La hauteur des crochets permet avantageusement à l'air d'être évacué par les moyens d'aspiration et de permettre de plaquer au mieux la feuille à la surface extérieure du moule, notamment permettre l'étirage et le plaquage des bords latéraux. En d'autres termes, les crochets sont agencés sur la surface extérieure du moule pour permettre la mise à distance de la partie de l'élément à rapporter de la surface extérieure du moule, et ainsi permettre l'aspiration de l'air lors du thermoformage, à travers notamment la zone de crochets, pour ainsi forcer la déformation autour de l'élément à rapporter. Une fonction similaire peut aussi être obtenue avec une partie agrippante à boucles.

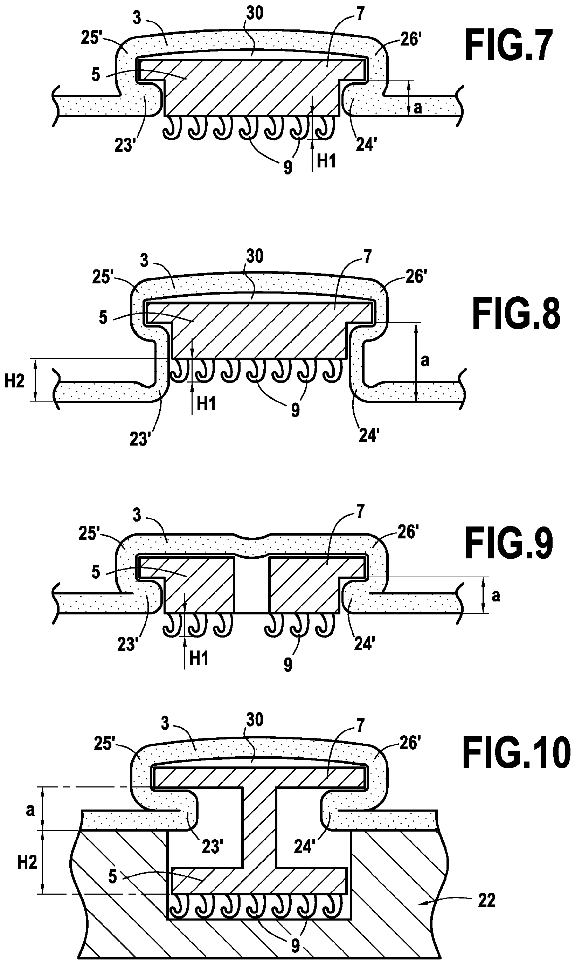

La hauteur H2 (appelée hauteur de position de l'embase) est la distance de la face inférieure de l'embase à partir de laquelle font saillie les crochets jusqu'au fond du moule, c'est-à-dire aussi la face inférieure de la feuille. Cette hauteur H2 peut être supérieure à 0 (Figure 10 par exemple), inférieure à 0 (Figure 5A) ou égale à 0 (proche de 0 à la Figure 5B). La valeur absolue de la hauteur H2 peut préférentiellement être inférieure à 5 fois l'épaisseur moyenne de la feuille « e » et inférieure à 10 fois la hauteur H1 des crochets.

La hauteur H3 (appelée hauteur d'embase) est l'épaisseur de la plaque formant l'embase de l'élément à rapporter ou rapporté. La hauteur H3 peut être comprise entre 0,5mm et 30,0mm.

Aux modes de réalisation des figures 5A à 5C, l'embase est sous la forme d'une plaque rectangulaire plane de base qui est biseautée à sa périphérie d'un angle compris entre 10° et 60°, par exemple 45°.

On peut donner à l'embase (voir l'élément 4 des figures 2 à 4) une forme symétrique de rotation, de sorte qu'une fois sertie à la feuille thermoformée, elle peut cependant tourner sur elle-même par rapport à son axe.

Comme représenté aux figures 5A à 5C, l'épaisseur moyenne de la feuille « e » correspond sensiblement à la hauteur H1 des crochets, et on choisit de préférence que la distance de surplomb d soit supérieure à 1/3 de l'épaisseur moyenne de la feuille e, de préférence supérieure à l'épaisseur moyenne de la feuille e, et on choisit la distance « a », appelée hauteur disponible de sertissage supérieure à l'épaisseur moyenne de la feuille e, notamment supérieure à 2 fois l'épaisseur moyenne de le feuille e. La distance « a », hauteur disponible de sertissage, se calcule du point le plus à l'extérieur de l'embase (pour la position horizontale du point et le plus proche de la surface inférieure du moule pour la position verticale, voir notamment figure 6) jusqu'au fond du moule, qui correspond au plan de la surface inférieure (sensiblement plane) de la feuille thermoformée destinée à être en contact avec le moule.

L'épaisseur de la feuille « es » au niveau de la zone de sertissage est inférieure à l'épaisseur moyenne de la feuille hors de la zone de sertissage « e », notamment « es » est égale à une valeur comprise entre 30% et 90% de la valeur de « e », en particulier entre 50% et 90% de la valeur de « e », plus particulièrement peut être égale à une valeur comprise entre 50% et 70% de la valeur de « e ».

L'épaisseur moyenne de la feuille « e » est de préférence comprise entre 0,5mm et 20mm, plus particulièrement entre 0,5mm et 5,0mm, encore plus particulièrement entre 1mm et 3mm. L'épaisseur moyenne est ici celle à proximité de la zone de sertissage et en dehors de la zone de sertissage.

La densité des crochets peut être comprise entre 10 et 750 crochets/cm², notamment entre 15 et 100 crochets/cm².

Comme on le voit aux figures, l'embase 6 est encastrée dans une sorte d'évidement formé par repliement de la feuille 3. De préférence, l'embase est en contact par sa surface supérieure (en particulier aux abords de la périphérie de l'embase) avec la feuille 3 pour diminuer tout jeu pouvant permettre un déplacement de l'élément rapporté.

L'élément rapporté serti est fixé à la feuille 3 par rabat partiellement et/ou localement d'une partie de la feuille sur l'élément.

Dans le mode de réalisation représenté aux figures 5A et 6, H2 et H1 sont sensiblement égaux.

En revanche, dans le mode de réalisation de la figure 7, H1 est supérieure à H2, tandis que dans le mode de réalisation de la figure 8, la valeur absolue de H2 est supérieure à H1 (A à la figure 8, H2 est négatif).

Aux figures 6 à 11, des modes de réalisation en variante sont représentés schématiquement au niveau du sertissage de l'élément à crochets à la feuille thermoformée.

Dans ces figures 6 à 11, l'embase, au lieu d'avoir une forme biseautée, a une forme en échelon.

Aux figures 5A, 5B, 5C, 6 et 6bis notamment, la pièce suivant l'invention peut présenter un interstice 30 définissant un espace entre l'embase et la feuille thermoformée. Cet interstice 30 est formé par emprisonnement d'air lors du thermoformage. La feuille thermoformée avec un tel interstice présente un rayon de courbure dans sa zone de sertissage moins élevé que celui de la feuille thermoformée sans un tel interstice. Le risque de création d'une amorce de rupture est réduit par la présence d'un tel interstice.

Aux figures 9, 11 et 14 notamment, la pièce suivant l'invention peut être dépourvue d'un interstice, ce qui permet avantageusement de réduire le volume global de la zone avec l'élément à rapporter et d'en assurer un meilleur maintien.

A la figure 7, les crochets s'étendent au delà de la feuille thermoformée. Pour obtenir cela, on a positionné les crochets dans une cavité au fond du moule lors de la mise en contact de la feuille ramollie et du moule. Au contraire, à la figure 8, on a positionné les crochets sur un piédestal au fond du moule lors de la mise en contact de la feuille ramollie et du moule.

A la figure 9, il est formé dans l'embase un trou central traversant. La matière de la feuille a tendance à y pénétrer légèrement, ayant pour effet d'améliorer encore plus la fixation.

A la figure 11, il est également prévu un trou traversant, mais dans ce mode de réalisation, il en résulte une traversée complète du trou par la feuille, qui vient ainsi se sertir sur toute la périphérie du trou, au niveau d'une rainure en échelon périphérique.

A la figure 10, les deux fonctions de l'embase, à savoir être sertie à la feuille et porter les crochets, sont réalisés par deux parties distinctes de l'embase, à savoir une partie supérieure en forme de plaque formant la zone de sertissage et qui est destinée à se sertir à la feuille thermoformée, tandis qu'une partie inférieure, également en forme de plaque reste à distance de la feuille et porte les crochets, les deux parties inférieure et supérieure étant reliées par une partie de plus faible section transversale, notamment en forme de tige. A la figure 10, une partie du moule 22 est représentée pour une meilleure compréhension.

Aux figures 12, 12A et 12B, il est représenté une pièce suivant l'invention. L'élément rapporté est une plaque constituée d'une pluralité de premières sections de grande largeur séparées les unes des autres par une pluralité de deuxièmes sections de plus petite largeur, des crochets faisant saillie d'une zone de la surface supérieure de la plaque qui conserve une largeur constante. La zone de crochets de largeur constante s'étend sur l'ensemble des plaques de grande et de petite largeurs.

Aux figures 13A, 13B et 14, il est représenté deux autres modes de réalisation de l'invention dans lesquels l'élément rapporté est du type écrou, par exemple en métal ou en matière thermoplastique. Ces pièces sont serties par la présence de plots 21 agencés sur la surface extérieure du moule 22 permettant de mettre à distance la partie de l'élément rapporté par rapport à la surface extérieure du moule.

Le thermoformage de la pièce peut être réalisé de manière complète ou partielle. On pourrait également utiliser comme pièce à rapporter des pièces telles que décrites dans les demandes de brevet WO2005096864, WO20130418809, US2015101156 ou WO2015052349 au nom de la demanderesse.

Aux modes de réalisation des figures 5A, 5B et 5C, suivant la vue en coupe longitudinale représentée, il est formée deux plis en C 23 et 24 extérieurs gauche et droit qui définissent entre eux une ouverture extérieure par laquelle la pièce 5 rapportée, notamment ses crochets 9, est directement accessible de l'extérieur. Les deux plis en C 23 et 24 ont leur concavité tournée vers l'intérieur (on définit l'intérieur et l'extérieur par rapport à la feuille, le côté de la feuille où se trouve la pièce 5 étant l'extérieur et l'autre côté l'intérieur).

Deux plis en C en deux points 25 et 26 intérieurs gauche et droit sont formés à la suite des plis en C 23 et 24 extérieurs gauche et droit en ayant leur concavité tournée vers l'extérieur. La distance entre les deux plis en C 25 et 26 intérieurs est supérieure à la distance entre les deux plis en C 23 et 24 extérieurs.

Aux modes de réalisation des figures 5A, 5B et 5C, la zone de sertissage peut être définie comme étant la partie de la feuille qui s'étend entre les plis 23 et 24 extérieurs et les plis 25 et 26 intérieurs, le long de l'élément rapporté. Dans cette zone de sertissage, l'épaisseur d'au moins une portion de la feuille ou l'épaisseur en moyenne de la feuille est inférieure à l'épaisseur de la feuille dans les autres endroits, notamment entre les plis 25 et 26 ou à gauche du pli 23 extérieur gauche ou à droite du pli 24 extérieur droit.

Aux modes de réalisation des figures 6, 6bis et 7 à 10, suivant la vue en coupe longitudinale représentée, il est formée deux plis en U 23' et 24' extérieurs gauche et droit qui définissent entre eux une ouverture extérieure par laquelle la pièce 5 rapportée, notamment ses crochets 9, est directement accessible de l'extérieur. Les deux plis 23' et 24' ont leur concavité tournée vers l'intérieur (on définit l'intérieur et l'extérieur par rapport à la feuille, le côté de la feuille où se trouve la pièce 5 étant l'extérieur et l'autre côté l'intérieur).

Deux plis en U 25' et 26' intérieurs gauche et droit sont formés à la suite des plis 23' et 24' extérieurs gauche et droit en ayant leur concavité tournée vers l'extérieur. La distance entre les deux plis 25' et 26' intérieurs est supérieure à la distance entre les deux plis 23' et 24' extérieurs.

Aux modes de réalisation des figures 6, 6bis et 7 à 10, la zone de sertissage peut être définie comme étant la partie de la feuille qui s'étend entre les plis 23' et 24' extérieurs et les plis 25' et 26' intérieurs, le long de l'élément rapporté. Dans cette zone de sertissage, l'épaisseur d'au moins une portion de la feuille ou l'épaisseur en moyenne de la feuille est inférieure à l'épaisseur de la feuille dans les autres endroits, notamment entre les plis 25' et 26' ou à gauche du pli 23' extérieur gauche ou à droite du pli 24' extérieur droit.

Au mode de réalisation de la figure 11, il est représenté deux pièces rapportée, ayant chacune une zone de sertissage gauche à deux plis en C 23 et 25, respectivement droite à deux plis en C 24 et 26 et une zone de sertissage droite à deux plis en U 24' et 26', respectivement gauche à deux plis en U 23' et 25' .

Au mode de réalisation de la figure 11, la zone de sertissage peut être définie comme étant la partie de la feuille qui s'étend entre les plis 23, 24', 23' et 24 extérieurs et les plis 25, 26', 25' et 26 intérieurs qui leur sont respectivement directement voisin, le long de l'élément rapporté. Dans cette zone de sertissage, l'épaisseur de la feuille est inférieure à l'épaisseur de la feuille dans les autres endroits, notamment entre les plis 25 et 26', entre les plis 25' et 26, entre les plis 24' et 23' ou à gauche du pli 23 extérieur gauche ou à droite du pli 24 extérieur droit.

Aux modes de réalisation des figures 13A et 13B ou de la figure 14, suivant la vue en coupe longitudinale représentée, il est formée deux plis en U 23' et 24' extérieurs gauche et droit qui définissent entre eux une ouverture extérieure par laquelle la pièce 5 rapportée est directement accessible de l'extérieur. Les deux plis en U 23' et 24' ont leur concavité tournée vers l'intérieur (on définit l'intérieur et l'extérieur par rapport à la feuille, le côté de la feuille où se trouve la pièce 5 étant l'extérieur et l'autre côté l'intérieur) .

Deux plis en C 25 et 26 intérieurs gauche et droit sont formés à la suite des plis en U 23' et 24' extérieurs gauche et droit en ayant leur concavité tournée vers l'extérieur. La distance entre les deux plis en C 25 et 26 intérieurs est supérieure à la distance entre les deux plis en U 23' et 24' extérieurs.

Deux plis en C 27 et 28 les plus à l'intérieur gauche et droit sont formés à la suite des plis en C 25 et 26 intérieurs.

Aux modes de réalisation des figures 13A et 13B ou de la figure 14, la zone de sertissage peut être définie comme étant la partie de la feuille qui s'étend entre les plis en U 23' et 24' extérieurs et les plis en C 25 et 26 intérieurs qui viennent directement à leur suite, le long de l'élément rapporté. Dans cette zone de sertissage, l'épaisseur de la feuille est inférieure à l'épaisseur de la feuille dans les autres endroits, notamment entre les plis 25' et 26' ou à gauche du pli 23' extérieur gauche ou à droite du pli 24' extérieur droit. la zone de sertissage peut aussi être définie comme étant la partie de la feuille qui s'étend entre les plis en U 23' et 24' extérieurs et les plis en C 27 et 28 les plus à l'intérieur, le long de l'élément rapporté. Dans cette zone de sertissage, l'épaisseur de la feuille est inférieure à l'épaisseur de la feuille dans les autres endroits, notamment entre les plis 25' et 26' ou à gauche du pli 23' extérieur gauche ou à droite du pli 24' extérieur droit.

D'une manière générale, suivant l'invention on peut définir la zone de sertissage comme comprenant au moins la zone de la feuille qui s'étend, en coupe transversale, entre les plis les plus à l'extérieur ayant leur concavité tournée vers l'intérieur et les plis plus à l'intérieur directement à la suite des plis les plus à l'extérieur et ayant leur concavité tournée vers l'extérieur.

La zone de sertissage peut également être définie comme comportant au moins la zone de la feuille qui s'étend, en coupe transversale, entre les plis les plus à l'extérieur ayant leur concavité tournée vers l'intérieur et les plis les plus à l'intérieur ayant leur concavité tournée vers l'extérieur.

Les domaines d'application de l'invention sont étendus, allant des transports (automobile, aéronautique, nautisme, bus, ferroviaire, etc..), en particulier pour réaliser des sièges, jusqu'à l'agroalimentaire en passant par l'emballage, le bâtiment, l'énergie, le médical, les communications, l'industrie, et autres.

## Revendications

1. Pièce ayant une forme réalisée par thermoformage à partir d'au moins une feuille (3) en matière plastique, par exemple en polycarbonate, et au moins un élément rapporté (6, 8 ; 7, 9) étant rapporté à la au moins une feuille en y étant solidarisé, la solidarisation du au moins un élément rapporté à la au moins une feuille étant réalisée au moins en partie par sertissage, **caractérisée en ce que** la feuille a une épaisseur (es) dans la zone de sertissage qui est inférieure à l'épaisseur moyenne (e) de la feuille hors de la zone de sertissage.

2. Pièce suivant la revendication 1, **caractérisée en ce que** l'élément rapporté est un élément auto-agrippant à crochets, constitué d'une embase et d'un champs de crochets faisant saillie d'une face inférieure de l'embase, le sertissage de l'élément rapporté étant tel que l'embase est reçue dans un évidement formé par la feuille d'une manière qui l'empêche d'en sortir, tandis que les crochets sont accessibles de l'extérieur, notamment pour coopérer avec un autre élément auto-agrippant, par exemple à boucles ou à crochets.

3. Pièce suivant la revendication 1 ou 2, **caractérisée en ce que** l'élément rapporté définit un surplomb (d), notamment périphérique, sous lequel s'insère la feuille thermoformée pour réaliser le sertissage.

4. Pièce suivant la revendication 3, **caractérisée en ce que** le surplomb (d) est supérieur à au moins 1/3 de l'épaisseur moyenne de la feuille hors zone de sertissage.

5. Pièce suivant l'une des revendications 1 à 4, **caractérisée en ce que** l'élément rapporté comporte une embase ayant au moins deux bords rectilignes parallèles opposés définissant deux surplombs parallèles pour la feuille, de sorte que l'élément rapporté est serti à la feuille en conservant cependant une mobilité parallèlement aux deux bords rectilignes.

6. Pièce suivant l'une des revendications 1 à 4, **caractérisée en ce que** l'élément rapporté comporte une embase ayant un bord circulaire définissant un surplomb périphérique circulaire pour la feuille, de sorte que l'élément rapporté est serti à la feuille en conservant cependant une mobilité en rotation par rapport à l'axe de l'embase.

7. Pièce suivant l'une des revendications 1 à 6, **caractérisée en ce que** la hauteur disponible de sertissage, c'est-à-dire la distance du point le plus à l'extérieur de l'embase jusqu'à la face inférieure de la feuille thermoformée, est supérieure ou égale à l'épaisseur moyenne (e) de la feuille hors de la zone de sertissage, préférentiellement la hauteur (a) disponible est supérieure ou égale à deux fois l'épaisseur moyenne (e) de la feuille.

8. Pièce suivant l'une des revendications 2 à 7, **caractérisée en ce que** la densité des crochets est comprise entre 10 et 750 crochets/cm².

9. Pièce suivant l'une des revendications 1 à 7, **caractérisée en ce que** la feuille a une rigidité telle que son module de flexion est compris entre 1500 et 3500 Mpa.

10. Pièce suivant l'une des revendications 2 à 7, **caractérisée en ce qu'**au moins un des crochets les plus à la périphérie du champ de crochets, notamment tous les crochets les plus à la périphérie du champ de crochets sont à distance de la feuille thermoformée.

11. Procédé de fabrication d'une pièce comportant au moins une feuille en matière plastique, la feuille ayant une épaisseur (es) dans la zone de sertissage qui est inférieure à l'épaisseur moyenne (e) de la feuille hors de la zone de sertissage, la feuille étant notamment rigide, par exemple en polycarbonate, et au moins un élément rapporté, qui comporte les étapes dans lesquelles :
- on réalise un moule ayant une surface extérieure correspondant à la forme de la pièce finale souhaitée ;
- on positionne sur la surface extérieure, de préférence sur une partie plane, au moins un élément à rapporter que l'on souhaite solidariser à la feuille, ce positionnement étant réalisé de sorte qu'au moins une partie de l'élément à rapporter est à distance de la surface extérieure du moule;
- on amène en face de la surface extérieure du moule une feuille en matière plastique, par exemple en polycarbonate, chauffée à une température permettant son thermoformage ;
- on met en contact la surface extérieure du moule et la feuille chauffée pour donner à la feuille sa forme finale, la feuille, lors de la mise en contact, venant s'introduire entre la partie de l'élément rapporté à distance de la surface extérieure du moule et la surface extérieure du moule pour réaliser le sertissage de l'élément rapporté à la feuille après retour à une température inférieure à la température de fléchissement sous charge de la matière plastique de la feuille, notamment à température ambiante.

12. Procédé de fabrication suivant la revendication 11, **caractérisé en ce que** la mise en contact de la surface extérieure du moule comportant un ou des éléments rapportés avec la feuille chauffée s'effectue à l'aide de moyens d'aspiration destinés à plaquer la feuille contre le moule.

13. Procédé de fabrication suivant la revendication 11 OU 12, **caractérisé en ce que** la mise en contact de la surface extérieure du moule comportant un ou des éléments rapportés avec la feuille chauffée est réalisée de manière plus forte au niveau de l'élément rapporté ou de chaque élément rapporté par rapport aux autres zones de la feuille, par exemple en prévoyant une aspiration plus forte au niveau de l'élément rapporté ou de chaque élément rapporté.

## Patentansprüche

1. Werkstück mit einer Form, die durch Thermoformen aus zumindest einer Folie (3) aus Kunststoff, beispielsweise aus Polycarbonat, und zumindest einem angebrachten Element (6, 8; 7, 9), das an der zumindest einen Folie angebracht und fest mit dieser verbunden ist, gebildet ist, wobei die Verbindung des zumindest einen angebrachten Elements mit der zumindest einen Folie zumindest teilweise durch Einfassen ausgeführt ist, **dadurch gekennzeichnet, dass** die Folie im Einfassbereich eine Dicke (es) aufweist, die kleiner als die durchschnittliche Dicke (e) der Folie außerhalb des Einfassbereichs ist.

2. Werkstück nach Anspruch 1, **dadurch gekennzeichnet, dass** das angebrachte Element ein selbsthaftendes Element mit Haken ist, das aus einer Grundplatte und einem von einer Unterseite der Grundplatte vorstehenden Hakenfeld besteht, wobei das Einfassen des angebrachten Elements so erfolgt, dass die Grundplatte so in einer durch die Folie ausgebildeten Aussparung aufgenommen wird, dass sie daraus nicht herausgelangen kann, während die Haken von außen zugänglich sind, um insbesondere mit einem anderen selbsthaftenden Element, beispielsweise mit Schlaufen oder Haken, zusammenzuwirken.

3. Werkstück nach Anspruch 1 oder 2, **dadurch gekennzeichnet, dass** das angebrachte Element einen Überstand (d), insbesondere einen Umfangsüberstand, definiert, unter den sich die warmgeformte Folie einfügt, um die Einfassung zu bilden.

4. Werkstück nach Anspruch 3, **dadurch gekennzeichnet, dass** der Überstand (d) größer als mindestens 1/3 der durchschnittlichen Dicke der Folie außerhalb des Einfassbereichs ist.

5. Werkstück nach einem der Ansprüche 1 bis 4, **dadurch gekennzeichnet, dass** das angebrachte Element eine Grundplatte mit zumindest zwei gegenüberliegenden geradlinigen parallelen Kanten aufweist, die zwei parallele Überstände für die Folie definieren, sodass das angebrachte Element in die Folie eingefasst ist und zugleich eine Beweglichkeit parallel zu den beiden geradlinigen Kanten behält.

6. Werkstück nach einem der Ansprüche 1 bis 4, **dadurch gekennzeichnet, dass** das angebrachte Element eine Grundplatte mit einer kreisförmigen Kante aufweist, die einen kreisförmigen Umfangsüberstand für die Folie definiert, sodass das angebrachte Element in die Folie eingefasst ist und zugleich eine Drehbeweglichkeit relativ zur Achse der Grundplatte behält.

7. Werkstück nach einem der Ansprüche 1 bis 6, **dadurch gekennzeichnet, dass** die verfügbare Einfassungshöhe, d. h. der Abstand vom äußersten Punkt der Grundplatte bis zur Unterseite der thermogeformten Folie, größer als oder so groß wie die durchschnittliche Dicke (e) der Folie außerhalb des Einfassbereichs ist, wobei die die verfügbare Höhe (a) vorzugsweise größer als oder so groß wie das Doppelte der durchschnittlichen Dicke (e) der Folie ist.

8. Werkstück nach einem der Ansprüche 2 bis 7, **dadurch gekennzeichnet, dass** die Dichte der Haken zwischen 10 und 750 Haken/cm² beträgt.

9. Werkstück nach einem der Ansprüche 1 bis 7, **dadurch gekennzeichnet, dass** die Folie eine solche Steifigkeit aufweist, dass ihr Biegemodul zwischen 1.500 und 3.500 MPa beträgt.

10. Werkstück nach einem der Ansprüche 2 bis 7, **dadurch gekennzeichnet, dass** zumindest einer der dem Umfang des Hakenfelds am nächsten liegenden Haken, insbesondere alle dem Umfang des Hakenfelds am nächsten liegenden Haken, von der thermogeformten Folie beabstandet sind.

11. Verfahren zur Herstellung eines Werkstücks, umfassend zumindest eine Folie aus Kunststoff, wobei die Folie im Einfassbereich eine Dicke (es) aufweist, die kleiner als die durchschnittliche Dicke (e) der Folie außerhalb des Einfassbereichs ist, wobei die Folie insbesondere steif ist, beispielsweise aus Polycarbonat, und zumindest ein angebrachtes Element, das die folgenden Schritte aufweist:
- Herstellen einer Form mit einer Außenfläche, die der Form des gewünschten Endwerkstücks entspricht;
- Positionieren zumindest eines anzubringenden Elements, das fest mit der Folie verbunden werden soll, auf der Außenfläche, vorzugsweise auf einem ebenen Teil, wobei dieses Positionieren so erfolgt, dass zumindest ein Teil des anzubringenden Elements von der Außenfläche der Form beabstandet ist;
- Anordnen einer Folie aus Kunststoff, beispielsweise aus Polycarbonat, die auf eine Temperatur erwärmt ist, die ihre Thermoformung ermöglicht, gegenüber der Außenfläche der Form;
- Inkontaktbringen der Außenfläche der Form und der erwärmten Folie, um der Folie ihre Endform zu verleihen, wobei sich die Folie während des Inkontaktbringens zwischen den Teil des von der Außenfläche der Form beabstandet angebrachten Elements und die Außenfläche der Form einfügt, um das angebrachte Element mit der Folie nach Rückkehr auf eine Temperatur, die niedriger als die Biegetemperatur des Folienkunststoffs unter Belastung, insbesondere auf Raumtemperatur, einzufassen.

12. Herstellungsverfahren nach Anspruch 11, **dadurch gekennzeichnet, dass** das Inkontaktbringen der ein oder mehrere angebrachte Elemente aufweisenden Außenfläche der Form mit der erwärmten Folie anhand von Saugmitteln erfolgt, die dazu bestimmt sind, die Folie gegen die Form zu pressen.

13. Herstellungsverfahren nach Anspruch 11 oder 12, **dadurch gekennzeichnet, dass** das Inkontaktbringen der ein oder mehrere angebrachte Elemente aufweisenden Außenfläche der Form mit der erwärmten Folie im Bereich des angebrachten Elements bzw. jedes angebrachten Elements stärker als in den anderen Bereichen der Folie erfolgt, indem beispielsweise im Bereich des angebrachten Elements bzw. jedes angebrachten Elements eine stärkere Saugkraft vorgesehen ist.

## Claims

1. A part with a shape produced by thermoforming from at least one sheet (3) of plastic material, for example polycarbonate, and at least one added part (6, 8; 7, 9) added to the at least one sheet by being rigidly connected to it, the rigid connection of the at least one added part to the at least one sheet being achieved at least in part by crimping, **characterised in that** the sheet has a thickness (es) in the crimping zone that is less than the average thickness of the sheet (e) outside the crimping zone.

2. A part according to claim 1, **characterised in that** the added part is a self-gripping component with hooks, comprising a base and a hook field projecting from at least one lower surface of the base, the crimping of the added part being such that the base is fitted in a recess formed by the sheet in a manner that prevents it from becoming detached, while the hooks are accessible from the outside, in particular to work in conjunction with another self-gripping component, for example with loops or hooks.

3. A part according to claim 1 or 2, **characterised in that** the added part defines an overhang (d), in particular peripheral, under which the thermoformed sheet is inserted to achieve the crimping.

4. A part according to claim 3, **characterised in that** the overhang (d) is greater than at least 1/3 of the average thickness of the sheet outside the crimping zone.

5. A part according to one of claims 1 to 4, **characterised in that** the added part comprises a base with at least two straight parallel opposite edges defining two parallel overhangs for the sheet, so that the added part is crimped to the sheet while however preserving mobility parallel to the two straight edges.

6. A part according to one of claims 1 to 4, **characterised in that** the added part comprises a base with a circular edge defining a circular peripheral overhang for the sheet, so that the added part is crimped to the sheet while however preserving mobility in rotation with respect to the centre line of the base.

7. A part according to one of claims 1 to 6, **characterised in that** the height available for crimping, that is to say the distance from the outermost point of the base to the lower surface of the thermoformed sheet, is greater than or equal to the average thickness (e) of the sheet outside the crimping zone, preferably the height (a) available is greater than or equal to twice the average thickness (e) of the sheet.

8. A part according to one of claims 2 to 7, **characterised in that** the spacing of the hooks is between 10 and 750 hooks/cm².

9. A part according to one of claims 1 to 7, **characterised in that** the sheet has a rigidity such that its bending modulus is between 1,500 and 3,500 Mpa.

10. A part according to one of claims 2 to 7, **characterised in that** at least one of the hooks nearest the periphery of the hook field, in particular all the hooks nearest the periphery of the hook field are at a distance from the thermoformed sheet.

11. A manufacturing process of a part comprising at least one sheet of plastic material, the sheet having a thickness (es) in the crimping zone that is less than the average thickness (e) of the sheet outside the crimping zone, the sheet being in particular rigid, for example in polycarbonate, and at least one added part, which comprises the stages in which:
- a mould is produced having an external surface corresponding to the shape of the desired final part;
- at least one added part which it is desired to connect rigidly to the sheet is positioned on the external surface, for preference on a flat part, this positioning being such that at least one part of the added part is at a distance from the external surface of the mould;
- a sheet of plastic material, for example in polycarbonate, heated to a temperature enabling it to be thermoformed, is placed in front of the external surface of the mould;
- the external surface of the mould and the heated sheet are brought into contact to give the sheet its final shape, the sheet, when placed in contact, being introduced between the part of the added part at a distance from the external surface of the mould and the external surface of the mould to achieve crimping of the added part to the sheet after return to a temperature lower than the bending temperature under load of the plastic material of the sheet, in particular to ambient temperature.

12. A manufacturing process according to claim 11, **characterised in that** the placing in contact of the external surface of the mould comprising one or more added parts with the heated sheet is done using suction means for pressing the sheet against the mould.

13. A manufacturing process according to claim 11 or 12, **characterised in that** the placing into contact of the external surface of the mould comprising one or more added parts with the heated sheet is done more forcefully at the location of the added part or of each added part compared to other areas of the sheet, for example by providing a stronger suction at the location of the added part or of each added part.
